# NEUE EUROPÄISCHE PATENTSCHRIFT

(11) **EP 1 316 563 B2**
(45) Veröffentlichungstag und Bekanntmachung des Hinweises auf die Entscheidung über den Einspruch: **10.11.2010**
(45) Hinweis auf die Patenterteilung: 07.02.2007
(21) Anmeldenummer: 02025572.5
(22) Anmeldetag: 15.11.2002
(51) Int. Cl.: C08B 11/20, C08B 15/00, C08L 1/26, C08L 1/28, C09J 101/26, C09J 101/28

(54) **Lösungsverzögerte Celluloseether und ein Verfahren zu ihrer Herstellung**
Cellulose ethers having delayed dissolution and a process for their production
Ethers de cellulose présentant une dissolution retardée et un procédé pour les produire

(30) Priorität: 28.11.2001 DE 10158488
(43) Veröffentlichungstag der Anmeldung: 04.06.2003
(73) Patentinhaber: Dow Global Technologies Inc., Midland, MI 48674 (US)
(72) Erfinder: Schlesiger, Hartwig, Dr., 29683 Fallingbostel (DE); Dannhorn, Wolfgang, Dr., 29614 Soltau (DE); Pannek, Jörn-Bernd, Dr., 29683 Fallingbostel (DE); Müller, Volkhardt, Dr., 29664 Walsrode (DE); Höhl, Frank, 29643 Neuenkirchen (DE)
(74) Vertreter: Polypatent

(56) Entgegenhaltungen:
- EP-A- 0 597 364
- EP-A- 0 686 666
- EP-B- 1 023 327
- WO-A-95/30705
- WO-A-99/18132
- DE-A- 19 842 637
- DE-B- 1 239 672
- FR-A- 1 547 665
- GB-A- 1 104 210
- GB-A- 1 165 284
- US-A- 2 488 631
- US-A- 3 072 635
- US-A- 3 356 519
- US-A- 3 489 719
- US-A- 4 133 383
- US-A- 4 537 959
- PATENT ABSTRACTS OF JAPAN vol. 006, no. 266 (C-142), 25. Dezember 1982 (1982-12-25) & JP 57 158244 A (KAO SEKKEN KK), 30. September 1982 (1982-09-30) & DATABASE CHEMABS [Online] CHEMICAL ABSTRACTS SERVICE, COLUMBO, OHIO, US; retrieved from STN Database accession no. 98:109165 & DATABASE WPI Week 198245 Derwent Publications Ltd., London, GB; AN 1982-95856e & JP 57 158244 A (KAO SOAP CO LTD), 30. September 1982 (1982-09-30)
- ' Ullman's Encyclopedia of Industrial Chemistry (1986)', VCH VERLAGSGESELLSCHAFT Seiten 461 - 466
- 'Ullman's Encyclopedia of Industrial Chemistry (2006)', Artikel 'Cellulose Ethers', Seiten 1 - 8
- 'Ullman's Encyclopedia of Industrial Chemistry, Vol.6', VCH VERLAGSGESELLSCHAFT Seiten 693 - 709
- 'Biology Data Book', Bd. 1-3, Artikel ALTMAN ET AL.,, Seiten 473 - 474

## Beschreibung

Die Erfindung betrifft lösungsverzögerte Celluloseether und ein Verfahren zur Herstellung von lösungsverzögerten Cellulosederivaten durch reversible Vernetzung mit Dialdehyden, bevorzugt Glyoxal.

Wasserlösliche Celluloseether, z.B: Methylcellulose, Methylhydroxyethylcellulose, Methylhydroxypropylcellulose, Hydroxyethylcellulose, Carboxymethylcellulose haben als haben als Klebstoffe, Verdickungsmittel oder Schutzkolloide weitverbreitet Anwendung gefunden. Das Einbringen des normalerweise in trockener Pulverform vorliegenden Celluloseethers in Wasser oder wässrige Systeme bringt jedoch häufig Probleme mit sich, da diese Substanzen zur oberflächlichen Vergelung und Verklumpung neigen. Hierdurch bedingt entstehen unerwünscht lange Auflösezeiten.

Es ist schon seit langem bekannt, dass das Lösungsverhalten von Celluloseethern über eine nachträgliche Behandlung beeinflusst werden kann.

So beschreibt z.B. die US-A-2,684,914 eine Methode zur Erhöhung der Viskosität von Carboxymethylcellulose (CMC) durch Einsatz von Formaldehyd und Natriumhydroxid. Ziel dieser Methode ist es, die Viskosität der CMC nachhaltig gegenüber der unbehandelten CMC zu verändern.

Auch sind verschiedene Verfahren zur Beeinflussung des Lösungsverhaltens durch Einsatz oberflächenaktiver Substanzen bekannt wie z.B. beschrieben in der US-A-2,647,064 oder US-A-2,720,464.

Die US-A-2,879,268 beschreibt ein Verfahren zur Behandlung von Cellulosederivaten in fester Form mit Formaldehyd oder Glyoxal bei einem niedrigen pH-Wert, um so die Agglomerationsneigung der Cellulosederivate beim Lösen zu minimieren.

Die DE-A-1 051 836 beschreibt ein Verfahren zur Behandlung von wasserlöslichen Celluloseethern, dadurch gekennzeichnet, dass der Celluloseether in feinzerteilter pulvriger Form mit polyfunktionelle Verbindungen behandelt wird.

Die US-A-3,072,635 beschreibt ein Verfahren zur Herstellung wasserdispergierbarer Cellulosederivate durch Behandlung solcher Cellulosederivate mit Glyoxal.

Die DE-A-1 239 672 beschreibt ein Verfahren zur Herstellung von in Wasser ohne Klumpenbildung löslicher pulverförmiger Methylcellulose, wobei man die Methylcellulose mit einem Dialdehyd und Wasser bei einem pH-Wert zwischen 3 und 7 verknetet und anschließend trocknet und zerkleinert

EP-A 0 597 364 offenbart ein analoges Verfahren, wobei jedoch Natriumdihydrogenphosphat zur Glyoxal vernetzung mit eingesetzt wird.

Die US-A-3,489,719 beschreibt ein Verfahren zur Oberflächenbehandlung trockener wasserlöslicher Cellulosederivate unter Einsatz eines Dialdehyds, eines Fettsäureethers und eines sauren Katalysators.

Die WO 99/18132 beschreibt ein Verfahren zur Herstellung verzögert wasserlöslicher Polysaccharidderivate mittels Glyoxal dadurch gekennzeichnet, ein Teil der benötigten Energie in Form von elektromagnetischer Strahlung zugeführt wird.

In Ullmann's Encyclopedia of Industrial Chemistry, Volume A5, 1986, S. 472-473 wird die Lösungsverzögerung von Methylcellulose und gemischten Methylcelluloseethern beschrieben. Zur Lösungsverzögerung wird wässriges Glyoxal mit einem pH-Wert von 4 bis 5 eingesetzt.

Diese Verfahren greifen größtenteils auf saure Katalysatoren zurück, sie sind oft mehrstufig in der Trocknung oder benötigen zusätzliche Behandlungsschritte nach der Trocknung und Zerkleinerung. Sie führen häufig zu einem unerwünschten Viskositätsabbau mit der Lagerzeit. Auch lassen sie sich häufig nicht auf ionische und nichtionische Cellulosether anwenden, so dass verschiedene Chemikaliengemische für die Lösungsverzögerung ionischer und nichtionischer Celluloseether bereitgehalten werden müssen.

Nach wie vor besteht daher Bedarf alle diese Nachteile zu beheben.

Aufgabe der vorliegenden Erfindung war es daher ein Verzögerungssystem zur Verfügung zu stellen, welches
- sowohl für ionische als auch nichtionische Celluloseether anwendbar ist,
- keine zusätzlichen Behandlungsschritte beinhaltet,
- keine sauren Katalysatoren einsetzt,
- minimalen Viskositätsabbau liefert
- mit Standardqualitäten oder technischen Qualitäten der eingesetzten Reagenzien auskommt.

Diese Aufgabe konnte dadurch gelöst werden, dass man das Verfahren zur Herstellung von verzögert wasserlöslichen Celluloseethern, umfassend die Schritte
a) Behandlung des feuchten Celluloseethers mit einer Lösung eines Dialdehyds und
b) Trocknung und Zerkleinerung des Celluloseethers,
derart verändert, dass das Verfahren gemäß Anspruch 1 durchgeführt wird. Bevorzugt wird hierbei so vorgegangen, dass sowohl eine wässrige Lösung des Dialdehyds bereitgehalten wird, als auch eine wässrige Salzlösung bereitgehalten wird, welche die Einstellung des pH-Wertes des Celluloseethers auf pH 6,0 bis 8,0 bewirkt und diese beiden Lösungen in jeweils dem Maße zu dem feuchten Celluloseether gegeben werden wie es zur Erreichung der gewünschten Lösungsverzögerung not-wendig ist. Es ist aber auch ebenso gut möglich, die beiden wässrigen Lösungen vor der Zugabe zu dem feuchten Celluloseether zu mischen.

Unter einem feuchten Celluloseether wird ein lösungsmittelfeuchter, bevorzugt ein wasserfeuchter Celluloseether verstanden.

Die Lösung des Dialdehyds ist bevorzugt eine wässrige Lösung.

Die Lösungsverzögerung mit Dialdehyden geschieht unter der Bildung von Halbacetalen, wobei dieser Vorgang einem sauer katalysierten Mechanismus unterliegt. Dennoch werden bei dem erfindungsgemäßen Verfahren unter Einstellung des pH-Wertes des Celluloseethers auf pH 6,0 bis 8,0 die gleichen Ergebnisse bezüglich der Lösungsverzögerung wie unter Einsatz eines sauren Katalysators erhalten.

Unter dem pH-Wert des Celluloseethers soll der pH-Wert einer 2 gew.-%igen Lösung des pulverförmigen Celluloseetherprodukts in vollentsalztem Wasser verstanden werden.

Bei dem wasserlöslichen Celluloseether kann es sich bei dieser Vorgehensweise um einen nichtionischen Celluloseether beispielsweise aus der Gruppe Methylcellulose, Methylhydroxyethylcellulose, Methylhydroxypropylcellulose oder Hydroxyethylcellulose ebenso wie um einen ionischen Celluloseether beispielsweise aus der Gruppe Carboxymethylcellulose, Carboxymethylhydroxyethylcellulose, Sulfoethylcellulose oder Carboxymethylsulfoethylcellulose handeln. Ebenso können Gemisch der genannten Cellulosether eingesetzt werden.

Der Cellulosether sollte nach der Zugabe der beiden wässrigen Lösungen oder des Gemisches der beiden wässrigen Lösungen vor der Trocknung und Zerkleinerung einen Wassergehalt von 40 bis 80 Gew.-% bezogen auf die Gesamtmasse besitzen. Der Wassergehalt kann durch die Zugabe der wässrigen Lösungen oder gegebenenfalls durch Zugabe von weiterem Wasser eingestellt werden.

Gegebenenfalls können weitere Lösungsmittel wie z.B. Alkohole (Methanol, Ethanol, Isopropanol, tert.-Butanol), welche nach der Wäsche des Celluloseethers an diesem anhaften, anwesend sein.

Die Trocknung und Zerkleinerung des wasserfeuchten Celluloseethers kann auch als Mahltrocknung ausgeführt werden, bei der die Trocknung unter gleichzeitiger Zerkleinerung stattfindet.

Die Zugabe der beiden wässrigen Lösungen oder des Gemisches der beiden wässrigen Lösungen zum Celluloseether kann batchweise oder kontinuierlich je nach Ausführung der Produktionsanlage erfolgen. Die Zugabe erfolgt durch Aufsprühen oder Zutropfen oder eine andere geeignete Zugabeart unter Mischen des feuchten Celluloseethers.

Eine Zugabe der Salze in fester Form führt im Gegensatz zur erfindungsgemäßen Vorgehensweise nicht zu einer homogenen Einstellung des pH-Wertes und löst nicht die beschriebenen Nachteile.

Bevorzugt setzt man als Dialdehyd zur Lösungsverzögerung Glyoxal ein. Die Zugabe der Glyoxal-Lösung erfolgt derart, dass eine Menge von 0,1 bis 4 Gew.-% der Wirksubstanz bezogen auf den trockenen Celluloseether erreicht wird. Bevorzugt setzt man 0,3 bis 2,5 Gew.-% der Wirksubstanz bezogen auf den trockenen Celluloseether ein.

Als Glyoxal-Lösung können technische Qualitäten, welche beispielsweise Säureanteile besitzen, eingesetzt werden, ohne dass es zu einer Qualitätsminderung des Produkts kommt.

Zur Einstellung des pH-Wertes des Celluloseethers auf pH 6,0 bis 8,0 wird eine wässrige Salzlösung eingesetzt. Bevorzugt wird hierbei der pH-Wert des Celluloseethers auf pH 6,5 bis 7,5 eingestellt.

Als wässrige Salzlösung wird eine Lösung aus einem Alkalidihydrogenphosphat wie z.B. Natriumdihydrogenphosphat und Dialkalihydrogenphosphat wie z.B. Dinatriumhydrogenphosphat oder Natriumkaliumhydrogenphosphat eingesetzt. Die beiden Salze werden in einem molaren Verhältnis von 2 zu 1 bis 1 zu 2 eingesetzt, besonders bevorzugt in einem molaren Verhältnis von 1,2 zu 1 bis 1 zu 1,2. Die gleichen Verhältnisse können beispielsweise auch durch partielle Neutralisation einer schwachen Säure oder partielle Ansäuerung des Salzes einer schwachen Säure eingestellt werden.

In jedem Fall sollte die wässrige Salzlösung vor der Zugabe zum Celluloseether hergestellt werden. Sowohl die Zugabe vor oder nach der Zugabe des wässrigen Glyoxals als auch die gleichzeitige Zugabe mit dem wässrigen Glyoxal als auch die Zugabe der Mischung der Salzlösung mit der Glyoxallösung ist erfindungsgemäß. Bevorzugt wird eine Mischung der Salzlösung mit der Glyoxallösung bereitet und zu dem wasserfeuchten Celluloseether zudosiert. Allein diese Zugabearten führen zu den gewünschten vorteilhaften Effekten, eine Zugabe der trockenen Salze zu dem feuchten Produkt oder eine getrennte Zugabe eines Alkalidihydrogenphosphat und eines Dialkalihydrogenphosphat führen nicht zu den erwünschten vorteilhaften Effekten. Wird beispielsweise entgegen der erfinderischen Vorgehensweise ein alkalischer Celluloseether nachträglich mit einer Säure behandelt, so wird keine homogene Neutralisation erreicht. Obschon eine Lösung des Cellulosethers dann einen neutralen pH-Wert in Wasser aufweist, lassen sich im Pulver saure und basische Stellen nachweisen, z.B. durch Besprühen des Pulvers mit einer Indikatorlösung.

Die wässrige Salzlösung wird in einer Menge eingesetzt, dass die Salze als trockene Substanz einer Einsatzmenge von 0,01 bis 2 Gew.-%, bevorzugt 0,1 bis 1 Gew.-%, besonders bevorzugt 0,2 bis 0,5 Gew.-% bezogen auf den trockenen Celluloseether entsprechen.

Durch diese Vorgehensweise konnten verzögert wasserlösliche Celluloseether hergestellt werden, die nach einer Lagerzeit von 2 Jahren einen Viskositätsabbau kleiner 15 % bezogen auf die Ausgangsviskosität aufweisen.

Ein erfindungsgemäßer Celluloseether wird bei der Auflösung in Wasser den pH-Wert des Wassers derart beeinflussen, dass dieser im Falle einer sauren Lösung angehoben wird und im Falle einer basischen Lösung abgesenkt wird. Dieser puffernde Effekt wird bei der erfindungsgemäßen Vorgehensweise so eingestellt, dass durch eine gezielte Erhöhung des pH-Wertes durch basische Substanzen es nach wie vor möglich ist, den Auflösevorgang auszulösen bzw. zu beschleunigen.

Unter Verzögerungszeit wird im Rahmen der vorliegenden Erfindung der Zeitraum verstanden, der zwischen dem Einrühren des Celluloseethers in Wasser und dem Beginn des Auflösungsvorgangs vergeht.

Ein weiterer Gegenstand der Erfindung ist die Verwendung der erfindungsgemäßen Cellulosether als Schutzkolloide, Verdickungsmittel oder Klebstoffe. Auch können Gemische der verzögert wasserlöslichen Celluloseether bereitet und in den beschriebenen Anwendungen eingesetzt werden.

### Beispiele

### Beispiele 1 bis 3

### Variation MHEC /CMC -Gemisch

In einem batchweise arbeitenden Mischer wurden jeweils eine wasserfeuchte MHEC (DS ca. 1,8 und MS ca. 0,45) und eine wasserfeuchte CMC (DS ca. 0,9) vorgelegt und mit einer wässrigen Lösung enthaltend Glyoxal sowie Na₂HPO₄ und NaH₂PO₄ im molaren Verhältnis 1 zu 1 unter Mischen besprüht. Die Wassermenge wurde jeweils so eingestellt, dass sich am Ende der Zugabe der wässrigen Lösung ein Wassergehalt von 50 Gew.-% bezogen auf die Gesamtmasse ergab. Die Einsatzmenge der Salze betrug 0,3 Gew.-% bezogen auf die Summe der trockenen Celluloseether sowie 2,2 Gew.-% Glyoxal bezogen auf die Summe der trockenen Celluloseether. Die wasserfeuchten Celluloseether wurden bei 55°C im Trockenschrank getrocknet und anschließend gemahlen. Die erhaltenen Produkte ließen sich klumpenfrei in Wasser oder in alkalische Lösungen einrühren. Es wurden Lösungen von hoher Lösungsqualität ohne Erhöhung der Trübung oder Erhöhung der Gelanteile relativ zu den Ausgangsmaterialien erhalten.

| Beispiel | MHEC, kg (trocken) | CMC, kg (trocken) | pH-Wert | Verzögerungszeit in alkalischer Lösung, pH 9 |
|---|---|---|---|---|
| 1 | 0,25 | 2,25 | 6,5 | 3 min |
| 2 | 0,5 | 2,0 | 6,5 | 3 min |
| 3 | 0,75 | 1,75 | 6,4 | 3 min |

### Beispiele 4 bis 7:

### Variation Zusammensetzung des Puffers / Glyoxal

In einem batchweise arbeitenden Mischer wurden jeweils eine wasserfeuchte CMC (DS ca. 0,9) vorgelegt (2,5 kg bezogen auf trockene CMC) und mit einer wässrigen Lösung enthaltend Glyoxal sowie Na₂HPO₄ und NaH₂PO₄ unter Mischen besprüht. Die Wassermenge wurde jeweils so eingestellt, dass sich am Ende der Zugabe der wässrigen Lösung ein Wassergehalt von 50 Gew.-%, bezogen auf die Gesamtmasse ergab. Gegebenenfalls wurde zur Erreichung des angestrebten Wassergehaltes zusätzliches Wasser dosiert. Die wasserfeuchte CMC wurde bei 55°C im Trockenschrank getrocknet und anschließend gemahlen. Die Einsatzmenge der Salze bezogen auf die Summe der trockenen CMC sowie die Einsatzmenge bezüglich Glyoxal bezogen auf die trockene CMC werden in untenstehender Tabelle angegeben. Die erhaltenen Produkte ließen sich klumpenfrei in Wasser oder in alkalische Lösungen einrühren. Es wurden Lösungen von hoher Lösungsqualität ohne Erhöhung der Trübung oder Erhöhung der Gelanteile relativ zu den Ausgangsmaterialien erhalten.

| Beispiel | Molares Verhältnis Na₂HPO₄ NaH₂PO₄ | Einsatzmenge Na₂HPO₄ / NaH₂PO₄, Gew.-% bezogen auf trockene CMC | Glyoxal, Gew.-% bezogen auf trockene CMC | pH-Wert | Verzögerungszeit in alkalischer Lösung, pH 9 |
|---|---|---|---|---|---|
| 4 | 1 zu 1 | 0,3 | 0,26 | 7 | 0,5 min |
| 5 | 1 zu 1 | 0,3 | 1,02 | 6,6 | 2,5 min |
| 6 | 1 zu 1 | 0,5 | 2,24 | 6,6 | 3 min |
| 7 | 2 zu 1 | 0,5 | 2,24 | 6,6 | 3 min |

### Beispiel 8:

### Vergleichsbeispiel ohne Puffer

Wie in Beispiel 6 wurde eine CMC (DS ca. 0,9) in einem batchweise arbeitenden Mischer mit wässriger Glyoxal-Lösung (technische Qualität) besprüht. Zum Vergleich wurde hier jedoch keine Salzlösung zur Einstellung des pH-Wertes eingesetzt. Wie in Beispiel 6 wurde die CMC getrocknet und gemahlen. Das erhaltene Produkt ließ sich klumpenfrei in Wasser oder in alkalische Lösungen einrühren. Die Verzögerungszeit bei pH 9 betrug 3 min. Der pH-Wert der resultierenden Lösung betrug pH 5,2. Es wurden Lösungen erhalten, die relativ zum Ausgangsmaterial eine deutliche Erhöhung der Trübung und Erhöhung der Gelanteile aufweisen.

### Beispiele 9 bis 12:

### Ausgangs-CMC mit variierendem pH und Viskosität

Es wurden CMC (DS ca. 0,9) mit verschiedenen Viskositäten und pH-Werten in vollentsalztem Wasser von 7,3 bis 8,8 gemäß der oben beschriebenen Vorgehensweise (Beispiel 5) mit einer wässrigen Lösung enthaltend Glyoxal sowie Na₂HPO₄ und NaH₂PO₄ im molaren Verhältnis 1 zu 1 lösungsverzögert. Die Wassermenge wurde jeweils so eingestellt, dass sich am Ende der Zugabe der wässrigen Lösung ein Wassergehalt von 50 Gew.-% bezogen auf die Gesamtmasse ergab. Die Einsatzmenge der Salze betrug 0,3 Gew.-% bezogen auf den trockenen Celluloseether sowie 1,02 Gew.-% Glyoxal bezogen auf den trockenen Celluloseether.

Die erhaltenen Produkte ließen sich klumpenfrei in Wasser oder in alkalische Lösungen einrühren. Es wurden Lösungen von hoher Lösungsqualität ohne Erhöhung der Trübung oder Erhöhung der Gelanteile relativ zu den Ausgangsmaterialien erhalten. Nachstehende Tabelle beschreibt die Ergebnisse:

| Beispiel | pH-Wert Ausgangssubstanz | pH-Wert Produkt | Verzögerungszeit in vollentsalztem Wasser | Viskosität 2 %ig |
|---|---|---|---|---|
| 9 | 8,8 | 7,3 | 8 min | 42.500 |
| 10 | 8,3 | 6,6 | 8,5 min | 9.900 |
| 11 | 7,9 | 6,6 | 6,5 min | 8.100 |
| 12 | 7,3 | 6,6 | 9 min | 18.900 |

### Beispiel 13:

In einem batchweise arbeitenden Mischer wurden bei Umgebungstemperatur 1000 kg einer CMC (DS ca. 0,9, Feuchte ca. 10 Gew.-%) vorgelegt und binnen 45 min unter Mischen mit 20 kg einer wässrigen Glyoxal-Lösung (40 gew.-%ig) sowie 35 Liter einer wässrigen Lösung enthaltend 0,2 kg Na₂HPO₄ und 0,16 kg NaH₂PO₄ sowie 745 Liter Wasser besprüht. Der Ansatz wurde für weitere 60 Minuten gemischt und anschließend binnen 4,5 Stunden in einem Stromtrockner bei 96°C getrocknet und danach in einer Prallmühle zerkleinert.

Das erhaltene Produkt lässt sich klumpenfrei in Wasser oder in alkalische Lösungen einrühren. Es werden Lösungen von hoher Lösungsqualität ohne Erhöhung der Trübung oder Erhöhung der Gelanteile relativ zu den Ausgangsmaterialien erhalten.

Das Produkt weist in alkalischer Lösung bei pH 9 eine Verzögerungszeit von mindestens 3 min auf.

### Beispiel 14:

Eine wasserfeuchte MHEC enthaltend ca. 1800 kg trockene Substanz wurde mit einer wässrigen Lösung enthaltend Glyoxal sowie Na₂HPO₄ und NaH₂PO₄ im molaren Verhältnis 1 zu 1 in einem batchweise arbeitenden Mischer behandelt, anschließend getrocknet und gemahlen. Das Produkt enthielt 1,7 Gew.-% Glyoxal und 0,3 Gew.-% der Salze homogen verteilt. Die lösungsverzögerte MHEC besitzt einen pH-Wert von 6,2 in vollentsalztem Wasser und eine Verzögerungszeit von 20 min in vollentsalztem Wasser.

Zur Bestimmung der Lagerstabilität wurden in regelmäßigen Abständen 2 gew.-%ige Lösungen des Produkts angesetzt und gemessen (D= 2,55 s-1, Haake Viscotester)

| Zeit nach Fertigung | Viskosität [mPas] | Relativer Abbau |
|---|---|---|
| 0,0 a | 40.000 | |
| 0,5 a | 38.200 | 4,5 % |
| 1,0 a | 37.400 | 6,5 % |
| 1,5 a | 35.300 | 11,8 % |
| 2,0 a | 34.600 | 13,5 % |

| | | |
|---|---|---|
| a = Jahre | | |

### Beispiel 15:

### Vergleich

Zum Vergleich wurde eine wasserfeuchte MHEC enthaltend ca. 500 kg trockene Substanz mit einer wässrigen Lösung enthaltend Glyoxal sowie NaH₂PO₄ in einem batchweise arbeitenden Mischer behandelt, anschließend getrocknet und gemahlen. Das Produkt enthielt 2 Gew.-% Glyoxal und 0,5 Gew.-% des Salzes homogen verteilt. Die lösungsverzögerte MHEC besitzt einen pH-Wert von 4,7 in vollentsalztem Wasser und eine Verzögerungszeit von 60 min in vollentsalztem Wasser. Die Verzögerungszeit bei pH 7 beträgt 17 min.

Zur Bestimmung der Lagerstabilität wurden in regelmäßigen Abständen 2 gew.-%ige Lösungen des Produkts angesetzt und gemessen (D= 2,55 s-1, Haake Viscotester)

| Zeit nach Fertigung | Viskosität [mPas] | Relativer Abbau |
|---|---|---|
| 0,0 a | 21.200 | |
| 0,5 a | 19.800 | 6,6 % |
| 1,0 a | 17.100 | 19,3 % |
| 1,5 a | 15.500 | 26,9 % |
| 2,0 a | 15.000 | 29.2 % |

Die gemäß der Erfindung hergestellte MHEC (Beispiel 14) weist gegenüber der gemäß dem Stand der Technik hergestellten MHEC (Beispiel 15) einen deutlich verringerten Abbau mit der Lagerzeit auf. Weiterhin ist dem Fachmann bekannt, dass höherviskose Celluloseether relativ gesehen zu einem stärkeren Abbau neigen als niedrigviskosere Cellulosether.

### Beispiele 16 bis 19

Die gleiche wasserfeuchte MHEC wie in Beispiel 14 wurde in einem kontinuierlich arbeitenden Zweischneckenkneter (Extruder) mit einer wässrigen Lösung enthaltend Glyoxal sowie Na₂HPO₄ und NaH₂PO₄ im molaren Verhältnis 1 zu 1 behandelt, so dass sich ein Wassergehalt von 78 Gew.-% im resultierenden Gel ergab. Dieses wurde kontinuierlich in eine Mahltrocknungsanlage (Ultrarotor, Firma Jäckering) gefördert und dort gleichzeitig zerkleinert und getrocknet. Das Produkt enthielt 1,7 Gew.-% Glyoxal und 0,3 Gew.-% der Salze homogen verteilt. Durch Variation der Umfangsgeschwindigkeit der Mahlwerkzeuge wurden Produkte unterschiedlicher Feinheit hergestellt. Die Produkte können bezüglich ihrer Feinheit durch den Siebdurchgang durch ein 0,063 mm Sieb charakterisiert werden.

| Beispiel | Umfangsgeschwindigkeit | Siebdurchgang < 0,063 mm | Verzögerungszeit bei pH 7 |
|---|---|---|---|
| 16 | 93 m/s | 70,3 Gew.-% | 13 min |
| 17 | 70 m/s | 40,3 Gew.-% | 15 min |
| 18 | 46 m/s | 7,5 Gew.-% | 16min |
| 19 | 35 m/s | 1,6 Gew.-% | 18 min |

## Patentansprüche

1. Verfahren zur Herstellung von verzögert wasserlöslichen Celluloseethern, umfassend die Schritte
a) Behandlung des feuchten Celluloseethers mit einer Lösung eines Dialdehyds und
b) Trocknung und Zerkleinerung des Celluloseethers,
**dadurch gekennzeichnet, dass** gleichzeitig oder zusammen mit der Lösung des Dialdehyds eine wässrige Salzlösung zu dem Celluloseether gegeben wird, wobei als wässrige Salzlösung eine Lösung aus einem Alkalidihydrogenphosphat und Dialkalihydrogenphosphat eingesetzt wird die beiden Salze in einem molaren Verhältnis von 2 zu 1 bis 1 zu 2 eingesetzt werden, wodurch der pH-Wertes des Celluloseethers auf pH 6,0 bis 8,0 homogen eingestellt wird.

2. Verfahren nach Anspruch 1 **dadurch gekennzeichnet, dass** es sich bei dem Celluloseether um einen nichtionischen Celluloseether aus der Gruppe Methylcellulose, Methylhydroxyethylcellulose, Methylhydroxypropylcellulose oder Hydroxyethylcellulose handelt.

3. Verfahren nach Anspruch 1 **dadurch gekennzeichnet, dass** es sich bei dem Celluloseether um einen ionischen Celluloseether aus der Gruppe Carboxymethylcellulose, Carboxymethylhydroxyethylcellulose, Sulfoethylcellulose oder Carboxymethylsulfoethylcellulose handelt.

4. Verfahren gemäß einem der vorangegangenen Ansprüche **dadurch gekennzeichnet, dass** der Cellulosether vor der Trocknung und Zerkleinerung einen Wassergehalt von 40 bis 80 Gew.-% bezogen auf die Gesamtmasse besitzt.

5. Verfahren gemäß einem der vorangegangenen Ansprüche **dadurch gekennzeichnet, dass** als Dialdehyd Glyoxal in einer Menge von 0,1 bis 4 Gew.-% bezogen auf den trockenen Celluloseether eingesetzt wird.

6. Verfahren gemäß einem der vorangegangenen Ansprüche **dadurch gekennzeichnet, dass** das Gemisch der Salze als trockene Substanz einer Einsatzmenge von 0,01 bis 2 Gew.-%, bevorzugt 0,1 bis 1 Gew.-% bezogen auf den trockenen Celluloseether entspricht.

7. Gemisch verzögert wasserlöslicher Celluloseether, **dadurch gekennzeichnet, dass** das Gemisch als Einzelkomponenten Celluloseether enthält, hergestellt gemäß einem der Ansprüche 1 bis 6.

8. Verwendung verzögert wasserlöslicher Celluloseether, hergestellt nach einem der Ansprüche 1 bis 6 als Schutzkolloid, Verdicker oder Klebstoff.

9. Verwendung nach Anspruch 8, **dadurch gekennzeichnet, dass** der verzögert wasserlösliche Celluloseether Carboxymethylcellulose ist.

## Claims

1. Process for preparing cellulose ethers which display delayed dissolution in water, comprising the steps
a) treatment of the moist cellulose ether with a solution of a dialdehyde and
b) drying and comminution of the cellulose ether,
**characterized in that** an aqueous salt solution which is a solution of an alkali metal dihydrogen phosphate and a di(alkali metal) hydrogen phosphate wherein the two salts are used in a molar ratio of from 2:1 to 1:2, is added simultaneously or together with the solution of the dialdehyde to the cellulose ether so as to set the pH of the cellulose ether homogeneously to from 6.0 to 8.0.

2. Process according to claim 1, **characterized in that** the cellulose ether is a nonionic cellulose ether from the group consisting of methylcellulose, methylhydroxyethylcellulose, methylhydroxypropylcellulose and hydroxyethylcellulose.

3. Process according to claim 1, **characterized in that** the cellulose ether is an ionic cellulose ether from the group consisting of carboxymethylcellulose, carboxymethylhydroxyethylcellulose, sulphoethylcellulose and carboxymethylsulphoethylcellulose.

4. Process according to any of the preceding claims, **characterized in that** the cellulose ether prior to drying and comminution has a water content of from 40 to 80 % by weight, based on the total mass.

5. Process according to any of the preceding claims, **characterized in that** glyoxal is used as dialdehyde in an amount of from 0.1 to 4% by weight, based on the dry cellulose ether.

6. Process according to any of the preceding claims, **characterized in that** the mixture of the salts on a dry basis is used in an amount of from 0.01 to 2% by weight, preferably from 0.1 to 1 % by weight, based on the dry cellulose ether.

7. A mixture of cellulose ethers which display delayed dissolution in water, **characterized in that** the mixture contains, as individual components, cellulose ethers prepared according to any of claims 1 to 6.

8. The use of cellulose ethers which display delayed dissolution in water and are prepared according to any of claims 1 to 6 as protective colloids, thickeners or adhesives.

9. The use according to claim 8, **characterized in that** the cellulose ether which displays delayed dissolution in water is carboxymethylcellulose.

## Revendications

1. Procédé pour la préparation d'éthers cellulosiques solubles dans l'eau mais à dissolution retardée, comprenant les stades opératoires suivants.
a) traitement de l'éther cellulosique humide par une solution d'un dialdéhyde et
b) séchage et broyage de l'éther cellulosique,
ce procédé **se caractérisant en ce qu'**en même temps que la solution du dialdéhyde ou avec cette solution on ajoute à l'éther cellulosique une solution aqueuse de sels, la solution aqueuse de sels consistant en une solution d'un dihydrogénophosphate alcalin et d'un hydrogénophosphate dialcalin, et dans laquelle les deux sels sont mis en oeuvre à un rapport molaire de 2 :1 à 1 : 2, ce qui provoque le réglage homogène du pH de l'éther cellulosique à un niveau de 6,0 à 8,0.

2. Procédé selon la revendication 1, **caractérisé en ce que** l'éther cellulosique est un éther cellulosique non ionique du groupe de la méthylcellulose, de la méthylhydroxyéthylcellulose, de la méthylhydroxypropylcellulose ou de l'hydroxyéthylcellulose.

3. Procédé selon la revendication 1, **caractérisé en ce que** l'éther cellulosique est un éther cellulosique ionique du groupe de la carboxyméthylcellulose, de la carboxyméthylhydroxyéthylcellulose, de la sulfoéthylcellulose ou de la carboxyméthylsulfoéthlycellulose.

4. Procédé selon l'une des revendications qui précèdent, **caractérisé en ce que** l'éther cellulosique, avant séchage et broyage, est à une teneur en eau de 40 à 90 % du poids de la masse totale.

5. Procédé selon l'une des revendications qui précèdent, **caractérisé en ce que** le dialdéhyde utilisé est le glyoxal, en quantité de 0,1 à 4 % du poids de l'éther cellulosique sec.

6. Procédé selon l'une des revendications du précèdent, **caractérisé en ce que** le mélange des sels est mis en oeuvre en quantité, exprimée en matière sèche, de 0,01 à 2% en poids, de préférence de 0,1 à 1 % en poids, par rapport à l'éther cellulosique sec.

7. Mélange d'éthers cellulosiques solubles dans l'eau mais à dissolution retardée, **caractérisé en ce que** ses composants individuels sont des éthers cellulosiques préparés selon l'une des revendications 1 à 6.

8. Utilisation d'éthers cellulosiques solubles dans l'eau mais à dissolution retardée, préparés selon l'une des revendications 1 à 6, en tant que colloïdes protecteurs, agents épaississants ou adhésifs.

9. Utilisation selon la revendication 8, **caractérisé en ce que** l'éther cellulosique soluble dans l'eau mais à dissolution retardée est une carboxyméthylcellulose.
